Europäisches Patentamt

European Patent Office

Office européen des brevets

(11) Veröffentlichungsnummer: **0 305 854**
**A2**

## (12) EUROPÄISCHE PATENTANMELDUNG

(21) Anmeldenummer: **88113662.6**

(22) Anmeldetag: **23.08.88**

(51) Int. Cl.⁴: **F02M 31/16 , F23K 5/00 , F28D 7/02**

(30) Priorität: 29.08.87 DE 3728895
01.09.87 DE 3729112
08.09.87 DE 3730060
15.09.87 DE 3730913
05.12.87 DE 3741281

(43) Veröffentlichungstag der Anmeldung:
**08.03.89 Patentblatt 89/10**

(84) Benannte Vertragsstaaten:
**AT BE CH DE ES FR GB GR IT LI LU NL SE**

(71) Anmelder: **Müller, Fritz, Dipl.-Ing.**
**Stentenbergstrasse 31**
**D-5275 Bergneustadt 1(DE)**

(72) Erfinder: **Müller, Fritz, Dipl.-Ing.**
**Stentenbergstrasse 31**
**D-5275 Bergneustadt 1(DE)**

(54) **Vorrichtung zum Erwärmen von Diesel- oder Heizöl für einen Motor oder Brenner.**

(57) Die Vorrichtung zum Erwärmen des bei Dieselfahrzeugen dem Motor zugeführten Dieselkraftstoffs enthält vor dem Dieselfilter einen die Kraftstoffleitung beheizenden Wärmetauscher, der für eine kontinuierliche Dieselerwärmung ohne zusätzlichen Energieaufwand vom warmen Motorkühlwasser durchflossen und beheizt ist, und einem am Dieselfilter angeordneten, das im Filtergehäuse enthaltene Filter- bzw. Kraftstoffvolumen direkt beheizenden elektrischen Heizkörper, der gesteuert, zum Beispiel manuell nur bei Bedarf, ein- und ausschaltbar ist.

Fig. 1

EP 0 305 854 A2

## Vorrichtung zum Erwärmen von Diesel- oder Heizöl für einen Motor oder Brenner

Die Erfindung bezieht sich auf eine Vorrichtung zum Erwärmen von Diesel- oder Heizöl gemäß dem Oberbegriff des Patentanspruchs 1, insbesondere eine Vorrichtung für Dieselfahrzeuge zum Erwärmen des dem Motor zugeführten Dieselkraftstoffs.

Es sind Dieselheizer bekannt und gebräuchlich, die aus einem mit dem Batteriestrom des Fahrzeugs beheizten, vor dem Kraftstoffilter in die Kraftstoffleitung eingebauten Durchlauferwärmer bestehen und die bei niedrigen Außentemperaturen durch eine Erwärmung des Dieselkraftstoffs, anstelle einer sonst erforderlichen Hinzumischung von Fließverbesserern oder dergleichen zum Dieselkraftstoff, ein Ausflocken des Paraffins im Kraftstoff und dadurch ein Verstopfen des Kraftstofffilters verhindern. Diese gebräuchlichen elektrischen Dieselheizer sind nur dafür vorgesehen, um bei Frost und Temperaturen des Dieselkraftstoffs unter 0° C den Dieselkraftstoff nur so weit zu erwärmen, daß die Paräffinausflockung im Kraftstofffilter nicht mehr eintreten kann. Wegen ihrer enorm hohen Stromaufnahme, die einen zusätzlichen Energieaufwand und eine starke Belastung für die Fahrzeugbatterie darstellt, werden diese gebräuchlichen elektrischen Dieselheizer deshalb auch in Abhängigkeit von der Kraftstofftemperatur von einem Thermoschalter nur bei Unterschreiten der Frostgrenze eingeschaltet und bei Überschreiten der Frostgrenze automatisch wieder ausgeschaltet.

Abgesehen von der Paraffinausflockung bei winterlichen Temperaturen unterhalb von 0° C bringt Dieselkraftstoff auch noch die Schwierigkeit mit sich, daß beim Dieselmotor im Gegensatz zum Ottomotor, der das Benzin weitgehend in verdampfter Form verbrennt, der Dieseltreibstoff von einer Einspritzpumpe nur in feinste Tröpfchen zerstäubt wird und ein solcher Kraftstofftropfen viel schwieriger vollständig zu verbrennen ist als das Benzin-Luftgemisch eines Ottomotors. Eine vollständige Verbrennung des Dieselöls gelingt höchstens in der sauerstofffreien Randzone des Treibstofftropfens, und je unvollkommener die Zerstäubung und unvollständig die Verbrennung des Dieselkraftstoffs ist, um so stärker ist neben dem Ausstoß von Stickoxiden vor allem das Entstehen von rauchenden und rußenden Abgasen und die Partikelemission im Dieselrauch. Eine bedeutende Verbesserung der Zerstäubung und damit eine vollständigere, im Verbrauch sparsamere und den Schadstoffgehält in den Abgasen reduzierende Verbrennung wäre zu erreichen, wenn der Dieselkraftstoff über seine normale Viskosität bei Raumtemperatur hinaus besonders fließfähig und dünnflüssig gemacht würde und hierzu auf Temperaturen im Breich zwischen etwa 40 und 80° Celsius erwärmt würde. Dies ist aber mit den gebräuchlichen elektrischen Dieselheizern wegen der dazu notwendigen, enorm hohen elektrischen Energie unmöglich.

Die Erfindung hat zur Aufgabe, eine Vorrichtung zu schaffen, die möglichst preiswert herstellbar und möglichst einfach in das Fahrzeug, auch nachträglich noch, einbaubar ist und mit der sowohl bei Winterkälte der Dieselkraft stoff im Bedarfsfall erwärmbar ist, um hauptsächlich beim Starten des Dieselmotors eine Verstopfung des Dieselfilters durch Versulzen zu vermeiden, als auch zu jeder Jahreszeit in wirtschaftlicher Weise der Dieselkraftstoff dauernd für den Dieselmotorbetrieb dermaßen erwärmt werden kann, daß eine möglichst vollkommene, schadstoffarme und sparsame Kraftstoffverbrennung im Dieselmotor eintritt.

Diese Aufgabe wird gemäß der Erfindung in erster Linie durch die im kennzeichnenden Teil des Anspruchs 1 enthaltenen Merkmale gelöst. Besonders vorteilhafte und zweckmäßige, erfindungsgemäße Ausführungen der Vorrichtung sind in den Unteransprüchen abgegeben und werden nachstehend anhand der Zeichnung näher beschrieben. In der Zeichnung zeigen

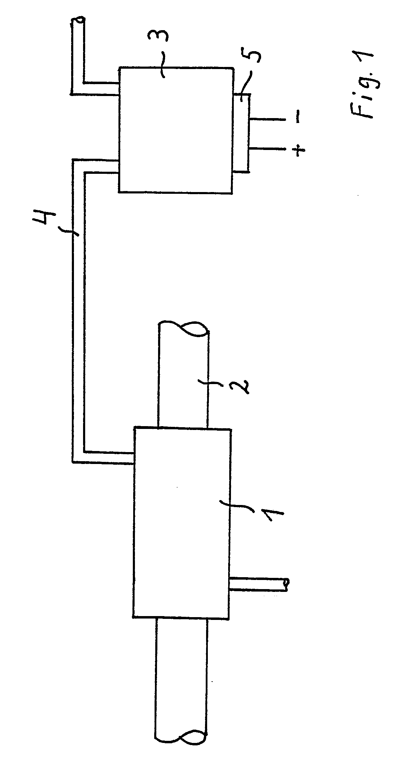

Figur 1 in schematisierter Darstellung den Wärmetauscher und den elektrischen Heizkörper als Hauptbestandteil der Vorrichtung;

Figur 2 ein erstes Ausführungsbeispiel des Wärmetauschers im Längsschnitt;

Figur 3 ein zweites Ausführungsbeispiel des Wärmetauschers im Längsschnitt;

Figur 4 ein Ausführungsbeispiel des elektrischen Heizkörpers;

Figuren 5 und 6 ein drittes Ausführungsbeispiel des Wärmetauschers im Längsschnitt und Querschnitt;

Figur 7 und 8 ein viertes Ausführungsbeispiel des Wäremtauschers im Längsschnitt und Querschnitt.

Die Vorrichtung enthält einen Wärmetauscher 1, der in eine Kühlwasserleitung 2 des Fahrzeuges zwischen Motor und Kühler eingesetzt ist und in dem die durch den Wärmetauscher zum Dieselfilter 3 weiterführende Kraftstoffleitung 4 mit dem Motorkühlwasser in Wärmeaustausch steht. Anstatt mit Motorkühlwasser könnte die Beheizung des Wärmetauschers auch mit Motorabgasen oder mit Motorkühlluft erfolgen. Ferner enthält die Vorrichtung einen unmittelbar am oder im Dieselfilter angeordneten und das Filtervolumen beheizenden elektrischen Heizkörper 5, der gesteuert ein- und ausschaltbar ist, beispielsweise bei Bedarf von Hand oder selbsttätig mit Hilfe eines Temperaturfühlers bei Unterschreiten einer vorbestimmten Kraftstofftemperatur am Zulauf oder im Innern des Dieselfilters. Mit dem Wärmetauscher 1 wird der Dieselkraftstoff, sobald kurz nach dem Start des Motors warm werdendes Kühlwasser in den Wärmetauscher gelangt, auf eine Temperatur erwärmt die im Winter über der Grenze der Filtrierbarkeit liegt und eine Verstopfung des Dieselfilters verhindert, und darüber hinaus kontinuierlich, ohne zusätzlichen Energieaufwand für jeden Fahrbetrieb so erwärmt und in der Fließfähigkeit verbessert, daß eine vollkommenere und rußfreiere Verbrennung und eine Reduzierung des Kraftstoffverbrauchs eintritt. Zur Überbrückung der Startphase, bis der Wärmetauscher genügende Wirksamkeit erreicht, kann bei besonders niedrigen Kältetemperaturen durch Einschalten des elektrischen Heizkörpers 5 der gegebenenfalls eingefrorene Dieselfilter 3 aufgetaut und so weit angewärmt werden, daß ein Versulzen durch zufließenden, noch nicht im Wärmetauscher 1 erwärmten Kraftstoff nicht eintritt. Der elektrische Heizkörper 5 braucht nur im Bedarfsfall für ein Auftauen des Filters und/oder Anwärmen des Filterinhalts und hierfür nur kurzzeitig eingeschaltet zu werden, und zur Stromersparnis und Schonung der Fahrzeugbatterie kann das Ein- und Ausschalten in einfachster Weise beispielsweise durch Handbetätigung mit einem Drucktastenschalter erfolgen.

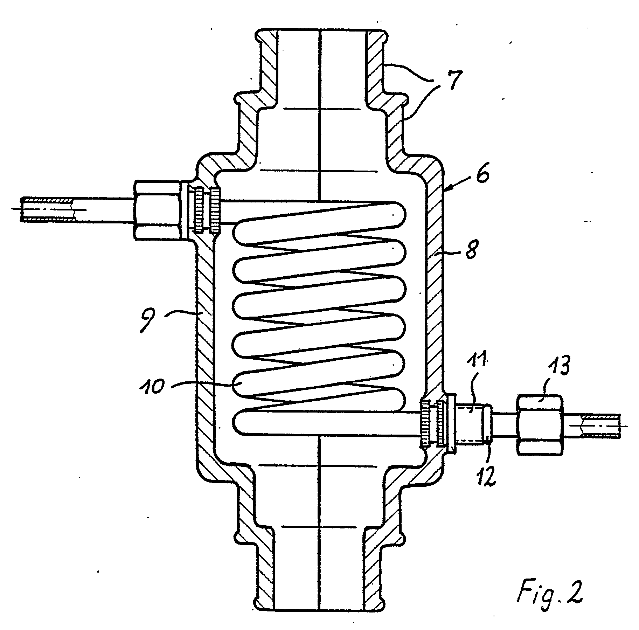

Der in Figur 2 dargestellte Wärmetauscher besteht aus einem rohrförmigen Gehäuse 6, das an beiden Stirnseiten gestufte Anschlußstutzen 7 zum Aufschieben und Festklemmen von Kühlwasserschlauchleitungen mit unterschiedlich vorkommenden Durchmessern aufweist. Das Gehäuse 6 ist in Längsrichtung in zwei halbzylindrische Schalen 8 und 9 unterteilt, die dicht miteinander verbunden sind, zum Beispiel durch Zusammenschrauben an Verbindungsflanschen, die an den Längsrändern der Schalen seitlich abstehen. Zwischen die beiden Schalen ist eine in Gehäuselängsrichtung schraubenförmig gewundene, mit der Kraftstoffleitung 4 verbindbare Rohrwendel 10 eingelegt, deren in radialer Richtung abstehende Rohrenden durch an den Schalen dicht und fest angeordnete Durchführungshülsen 11 hindurchgesteckt sind und in den Durchführungshülsen mittels eines Dichtungsringes 12 und einer Verschraubungsmutter 13 abgedichtet sind. Das Gehäuse 6 kann zum Beispiel aus Aluminium oder Blech bestehen. Der Zusammenbau dieses Wärmetauschers ist sehr einfach, da die Rohrwendel 10 bequem zwischen die beiden Schalen eingelegt und mit ihren Rohrenden aus dem Gehäuse herausgeführt und dann einfach und einwandfrei in den Gehäusedurchführungsöffnungen befestigt und abgedichtet werden kann.

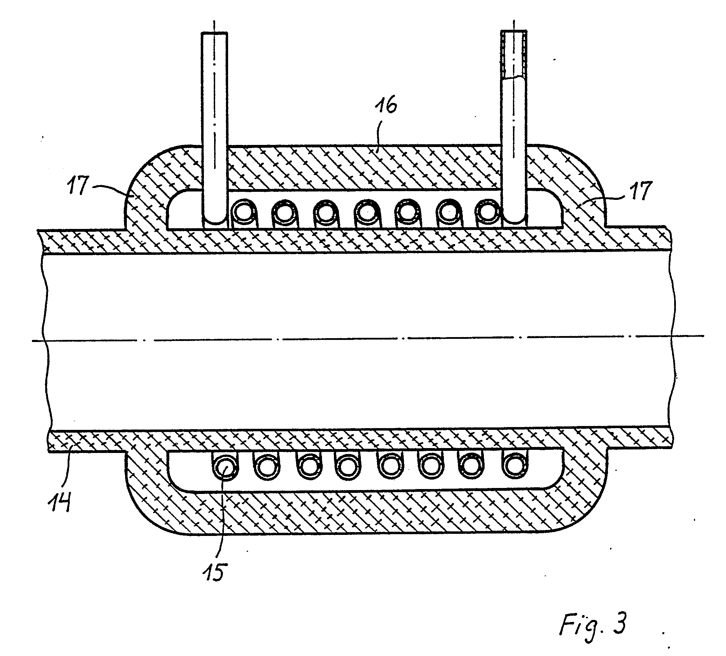

Der in Figur 3 dargestellte Wärmetauscher besteht aus einem Schlauch 14, wie er üblicherweise als Kühlwasserschlauch zwischen Motor und Kühler verwendet wird, und einer auf den Schlauch übergeschobenen schraubenförmigen Rohrwendel 15, die zur Vermeidung unnötiger Wärmeverluste von einer Hülse 16 ummantelt ist. Der Schlauch 14 und die Hülse 16 können aus einem ausreichend temperaturbeständigen Gummi oder Kunststoff oder einem anderen üblicherweise für die Herstellung flexibler Schläuche geeigneten elastomeren Material bestehen. Der Zwischenraum zwischen Schlauch 14 und Hülse 16 ist an beiden Enden durch Stirnwände 17 geschlossen. Hülse 16 und Stirnwände 17 können aus einem einzigen Teil bestehen und mit dem Schlauch 14, bei Verwendung von Gummi für Schlauch und Hülse, durch Vulkanisation fest verbunden sein. Bei Verwendung einer zum Beispiel aus Kunststoff separat gefertigten Hülse 16 kann wenigstens eine Stirnwand 17 abnehmbar sein und mit der Hülse 16 verbunden sein, um die Hülse 16 über die auf den Schlauch 14 bereits aufgeschobene Rohrwendel 15 überschieben zu können. Der Schlauch 14 kann beliebige Form und Länge haben und an seinen Enden je nach Einsatz die geeigneten Anschlüsse aufweisen. Der Zwischenraum zwischen Schlauch 14 und Hülse 16 kann mit einem gut wärmeleitenden festen Material gefüllt sein, in das beispielsweise die Rohrwendel 15 vor dem Aufschieben auf den Schlauch 14 eingebettet worden ist. Die anhand der Figur 3 geschilderte Wärmetauscherausbildung hat den großen Vorteil, daß die Anfertigung des Wärmetauschers direkt in die Herstellung der üblichen Kühlwasserschläuche für Kraftfahrzeuge einbezogen werden kann und der den Wärmetauscher enthaltende Kühlwasserstrang aus einem ununterbrochen durchgehenden, nur an den Motor und an den Kühler anzuschließenden Schlauchstück besteht. Unter anderem beispielsweise durch die Dicke der Schlauchwandung im Bereich der Rohrwendel oder durch die Anzahl der Windungen der Rohrwendel oder durch die Art der Ausfüllung des Zwischenraumes zwischen Schlauch und Hülse kann der Wärmeübergang vom Kühlwasser an den Brennstoff so beeinflußt werden, daß der Brennstoff bei normaler betrieblicher Kühlwassertemperatur die für die Einspritzung und Zerstäubung günstigste Temperatur von etwa 70° Celsius hat und keine Erhitzung auf eine beispielsweise zu einer Dampfblasenbildung führende Temperatur erfährt.

Von der in Figur 2 dargestellten Wärmetauscherausführung können zum Beispiel zwei Wärmetauscher hintereinander in der gleichen Kühlwasserschlauchleitung angeordnet sein, um mit einem Wärmetauscher die kontinuierliche Dieselerwärmung vorzunehmen und mit dem anderen Wärmetauscher warmes Waschwasser für die Scheibenwaschanlage zu erzeugen. Bei der in Figur 3 dargestellten Ausführung kann für die Erwärmung von Dieselkraftstoff und Scheibenwaschwasser je ein Kühlwasserschlauch mit einer Rohrwendel im Kühlwasservorlauf und im Kühlwasserrücklauf des Motors vorgeehen werden, oder es kann auf den Schlauch 14 eine zweite Rohrwendel 15 aufgeschoben und mit der Hülse 16 ummantelt sein.

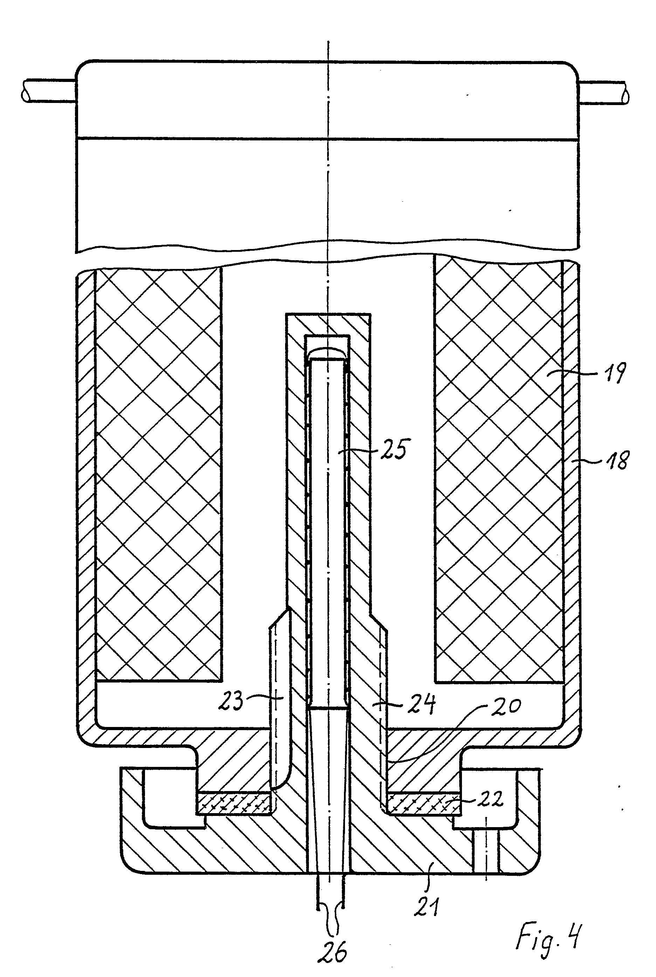

Eine besonders einfache und vorteilhafte Ausbildung der aus Herstellungs- und Montagegründen vom Wärmetauscher getrennten elektrischen Einrichtung der Vorrichtung für die Dieselerwärmung ist in der Figur 4 gezeigt und benutzt den Topf des Dieselfilters gleich selber als Wärmeaustauschraum für die Aufnahme eines vom Dieselkraftstoff umspülten elektrischen Heizkörpers. Das Gehäuse 18 des Dieselfilters enthält einen Filtereinsatz 19, der in der Mitte üblicherweise einen Hohlraum aufweist. Unter diesem Hohlraum besitzt das Filtergehäuse üblicherweise eine Wasserablaßöffnung 20, die durch eine Wasserablaßschraube 21 verschlossen ist. Durch Lockern der Wasserablaßschraube 21 hebt sich eine Dichtungsscheibe 22 etwas vom Filterge häuse oder von der Ablaßschraube ab und kann durch eine Längsnut 23, die an dem Einschraubende 24 der Wasserablaßschraube 21 ausgebildet ist, Wasserabscheidung aus dem Dieselfilter abgelassen werden. Auf dem Einschraubende 24 ist der elektrische Heizkörper in Form eines in den Hohlraum des Filtereinsatzes 19 hineinragendes Heizstabes 25 angeordnet, dessen Anschlußdrähte durch das Einschraubende 24 der Wasserablaßschraube hindurchgeführt sind und in Anschlußkontakten 26 auf der Außenseite der Wasserablaßschraube enden. Wenn die Ablaßschraube 21 aus Metall besteht, braucht nur die Stromzuleitung zum Heizstab isoliert durch die Ablaßschraube hindurchgeführt zu werden und kann die Stromrückleitung direkt über die Ablaßschraube an das üblicherweise metallische Filtergehäuse als Massepol erfolgen. Der Heizstab 25 enthält zweckmäßigerweise eine auf einem Keramikkern aufgewickelte Heizdrahtwicklung aus Nickelindraht bis 1 mm Durchmesser. Der besondere Vorteil dieser Ausbildung des elektrischen Heizkörpers für die Dieselerwärmung ist, daß zusätzlich zu der Anordnung des Wärmetauschers im Kühlwasserkreislauf jeder handelsübliche Dieselfilter in denkbar einfacher Weise zu einem elektrischen Dieselheizer umgewandelt werden kann, indem die konventionelle Wasserablaßschraube gegen die gemäß der Erfindung mit dem elektrischen Heizstab ausgestattete Wasserablaßschraube ausgewechselt wird. Zusätzliche Umbau- und Abdichtungsarbeiten an der Dieselkraftstoffleitung entfallen.

Der elektrische Heizkörper in Form des Heizstabes 25 kann auch von oben her durch eine im Filterdeckel vorgesehene Öffnung tauchsiederartig in das Filtergehäuse eingeführt sein.

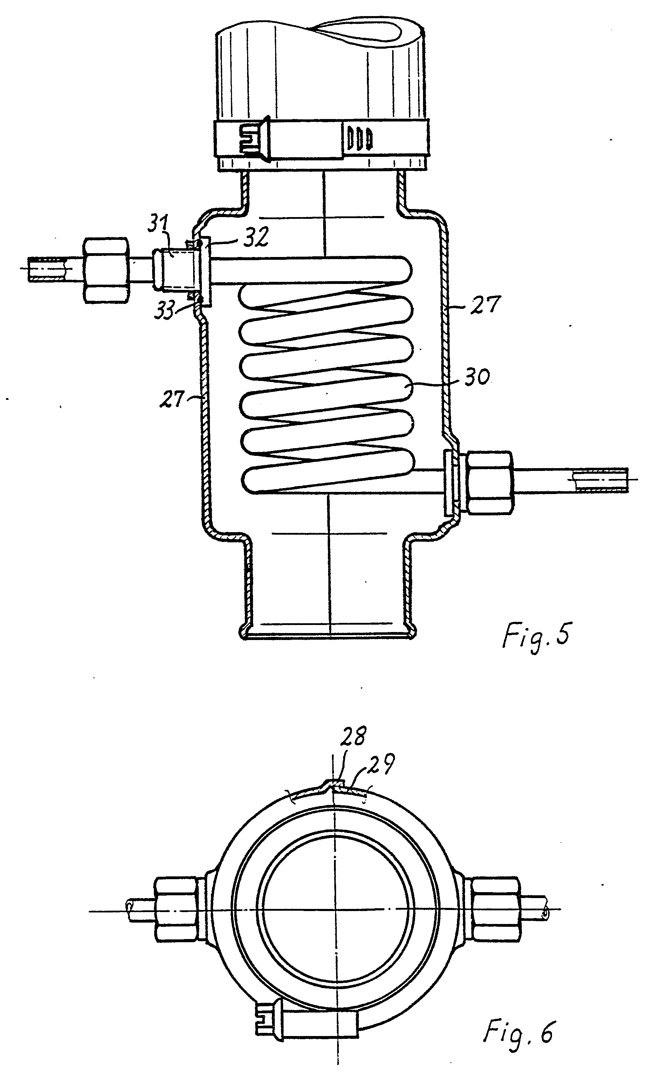

Bei dem in den Figuren 5 und 6 dargestellten Ausführungsbeispiel des Wärmetauschers nach Art der Figur 2 bestehen die beiden halbzylindrischen Gehäuseschalen 27 aus Blech. Die Längsränder 28 der einen Gehäuseschale sind in radialer Richtung, vorzugsweise in radialer Richtung nach außen, versetzt und überlappen die Längsränder 29 der anderen Gehäuseschale. An den überlappenden Längs rändern sind die beiden Gehäuseschalen nach dem bequemen Einbau der Rohrwendel 30 dicht und fest miteinander verbunden, beispielsweise durch eine Induktionsschweißung. Die Durchführungshülsen 31, durch die die Enden der Rohrwendel 30 hindurchgeführt sind und in denen die Rohrwendelenden mittels der Quetschringverschraubung abgedichtet sind, besitzen eine flanschartige Befestigungsschulter 32 und sind vorzugsweise von innen her durch Löcher in der Blechwand der Gehäuseschalen hindurchgesteckt. Die Befestigung der Durchführungshülsen 31 kann durch eine von außen aufgeschraubte Kontermutter erfolgen. Vorteilhafterweise kann die dichte Befestigung der Durchführungshülsen an der Blechwand der Gehäuseschalen maschinell durch eine Induktionsschweißung erfolgen, die im gleichen Arbeitsgang wie die Induktionsschweißung der beiden Gehäuseschalen erfolgen kann. Für die Induktionsschweißung der Durchführungshülsen mit der Blechwand der Gehäuseschalen enthält die Befestigungsschulter 32 zweckmäßigerweise einen die Durchführungshülsen 31 ringförmig umgebenden Wulst 33, mit dem die Befestigungsschulter 32 die Blechwand berührt und die Dichtheit der Induktionsschweißung sichergestellt wird.

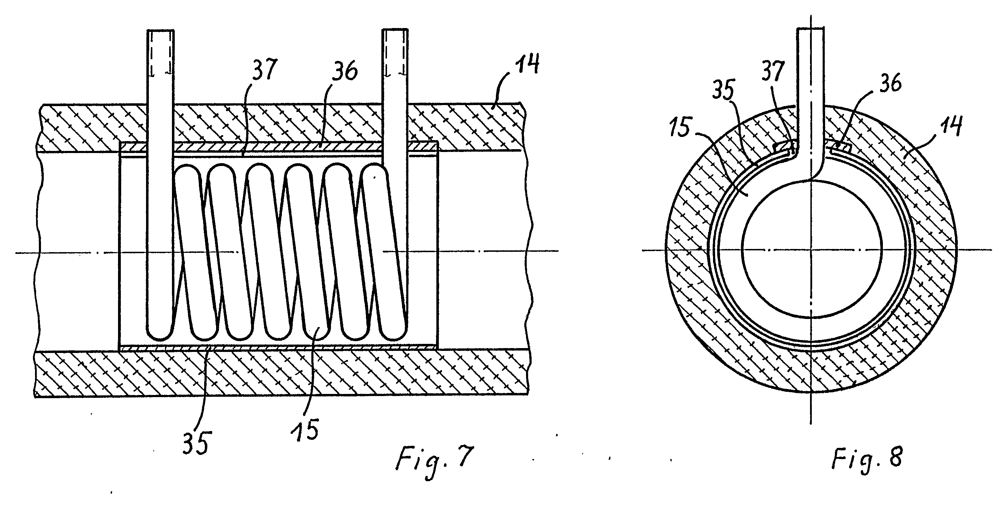

Der in den Figuren 7 und 8 dargestellte Wärmetauscher besteht, so wie der in Figur 3 dargestellte Wärmetauscher, aus einem Schlauch 14 aus Gummi, Kunststoff oder einem anderen Elastomermaterial und einer Rohrwendel 15, die jedoch freiliegend im Innern des Schlauches 14 angeordnet ist und von der den Schlauch durchstömenden Flüssigkeit, z. B. Motorkühlwasser, direkt umspült wird. Die radial gerichteten Enden der Rohrwendel 15 sind flüssigkeitsdicht durch die Schlauchwandung hindurchgeführt und aus dem Schlauch herausgeführt. Die Rohrwendel 15 wird direkt bei der Vulkanisationsherstellung des Gummischlauches bzw. Spritzgießherstellung des Kunststoffschlauches in dem Schlauch angeordnet und hierzu in das Formgebungswerkzeug für die Schlauchherstellung eingelegt. Damit hierbei der Schlauchwerkstoff nicht in die Rohrwendel 15 eindringt und nicht die Rohrwendel 15 einbettet, ist die Rohrwendel 15, bereits bei der Schlauchherstellung, von einer Hülse 35 umgeben, die aus einem beliebigen Material bestehen kann, welches der Verarbeitungstemperatur des Schlauchwerkstoffes standhält. Um die Rohrwendel 15 mit ihren beiden radial abstehenden Rohrenden in die Hülse 35 einschieben zu können, ist die Hülse 35 an einer Umfangsstelle mit einem Längsschlitz 37 versehen, durch den die Enden der Rohrwendel 15 in Hülsenlängsrichtung hindurchschiebbar sind. Zum Verschließen des Längsschlitzes 37 ist dann auf der Außenseite der Hülse 35 eine streifenförmige Abdeckung 36 aufgelegt, die passend zu den beiden radialen Enden der Rohrwendel 15 zwei Löcher aufweist und dadurch in radialer Richtung auf die beiden Enden der Rohrwendel 15 und auf die Außenseite der Hülse 35 aufgeschoben werden kann.

Die Anwendung der anhand der Figuren 2, 3, 5 und 7 geschilderten erfindungsgemäßen Wärmetauscherausbildung für die Dieselerwärmung setzt nicht voraus, daß außerdem auch noch am Dieselfilter der elektrische Heizkörper für eine Beheizung des Filtervolumens angewendet wird. Die anhand der Figuren 2, 3, 5 und 7 beschriebenen Wärmetauscher sind auch ohne eine elektrische Dieselbeheizung mit großem Vorteil zu dem Zweck anwendbar, den Dieselkraftstoff, weit über die zur Vermeidung einer Filterversulzung erforderliche Temperatur hinaus, unabhängig von der Jahreszeit kontinuierlich so hoch zu erwärmen, daß die Verbesserung der Zerstäubung beim Einspritzen und die kraftstoffsparende und schadstoffarme Verbrennung im Motor eintritt.

Die erfindungsgemäße gesamte Vorrichtung oder auch nur der erfindungsgemäße Wärmetauscher der Figuren 2, 3, 5 und 7 kann generell als Diesel-Einspargerät nicht nur bei allen Fahrzeugen mit Dieselmotor, sondern auch bei stationären Anlagen angewendet werden, bei denen Diesel- oder Heizöl zur Verbrennung zerstäubt wird, wie zum Beispiel auch bei Ölfeuerungs-Heizungsanlagen in Gebäuden, um mit dem durch die Heizungsanlage zirkulierenden Warmwasser das Heizöl zur Verbesserung der Zerstäubung und Verbrennung im Ölbrenner zu erwärmen.

**Ansprüche**

1. Vorrichtung zum Erwärmen von Diesel- oder Heizöl, das einem Aggregat zugeführt wird, in dem der zugeführte Brennstoff zerstäubt und verbrannt wird und von dem dabei eine Flüssigkeit erwärmt wird, wobei eine Brennstoffleitung durch einen Brennstoff-Filter zu dem Aggregat führt und eine Flüssigkeitsleitung von der von dem Aggregat erwärmten Flüssigkeit durchflossen wird, dadurch gekennzeichnet, daß vor dem Brennstoff-Filter (3) ein von der Flüssigkeit durchflossener, die Brennstoffleitung (4) beheizender Wärmetauscher (1) und am Brennstoff-Filter ein das Filtervolumen beheizender, gesteuert ein- und ausschaltbarer elektrischer Heizkörper (5) angeordnet sind.

2. Vorrichtung nach Anspruch 1, dadurch gekennzeichnet, daß der Wärmetauscher (1) aus einem rohrförmigen Gehäuse (6) besteht, das an beiden Stirnseiten mit der Flüssigkeitsleitung (2) verbindbare Anschlußstutzen (7) aufweist und in Längsrichtung in zwei dicht miteinander verbundene halbzylindrische Schalen (8, 9) unterteilt ist, zwischen die eine mit der Brennstoffleitung (4) verbindbare, in Gehäuselängsrichtung schraubenförmig gewundene Rohrwendel (10) eingelegt ist, deren in radialer Richtung abstehende Rohrenden durch wenigstens eine der beiden Schalen hindurchgesteckt sind und mittels Quetschring-Verschraubungen (12, 13) in der Durchführungsöffnung (11) der Schalenwand abgedichtet sind.

3. Vorrichtung zum Erwärmen einer in einer ersten Leitung fließenden Flüssigkeit mittels einer in einer zweiten Leitung fließenden, von einem Motor oder einem Brenner erwärmten Flüssigkeit, insbesondere Vorrichtung nach Anspruch 1, dadurch gekennzeichnet, daß die Vorrichtung aus einem Wärmetauscher besteht, bei dem die zweite Flüssigkeitsleitung aus einem Schlauch (14) aus Gummi, Kunststoff oder dergleichen Elastomermaterial besteht und die erste Flüssigkeitsleitung in Form einer schraubenförmig gewundenen Rohrwendel (15) auf die Außenseite des Schlauches aufgeschoben ist und von einer Hülse (16) ummantelt ist, wobei der Zwischenraum zwischen Gummischlauch und Hülse an den Enden geschlossen ist.

4. Vorrichtung nach Anspruch 3, dadurch gekennzeichnet, daß die Rohrwendel (15) von einer Hülse (16) aus Gummi umgeben ist, die zumindest an ihren Enden durch Vulkanisation mit dem aus Gummi bestehenden Schlauch (14) verbunden ist.

5. Vorrichtung nach Anspruch 3 oder 4, dadurch gekennzeichnet, daß der Zwischenraum zwischen dem Schlauch (14) und der Hülse (16) mit einem gut wärmeleitenden Feststoff gefüllt ist.

6. Vorrichtung zum Erwärmen einer in einer ersten Leitung fließenden Flüssigkeit mittels einer in einer zweiten Leitung fließenden, von einem Motor oder einem Brenner erwärmten Flüssigkeit, insbesondere Vorrichtung nach Anspruch 1, dadurch gekennzeichnet, daß die Vorrichtung aus einem Wärmetauscher besteht, bei dem die zweite Flüssigkeitsleitung aus einem Schlauch (14) aus Gummi, Kunststoff oder dergleichen Elastomermaterial besteht und die erste Flüssigkeitsleitung in Form einer schraubenförmig gewundenen Rohrwendel (15) im Innern des Schlauches angeordnet ist, wobei die Enden der Rohrwendel (15) radial nach außen gerichtet sind und abgedichtet die Wandung des Schlauches (14) durchsetzen.

7. Vorrichtung nach Anspruch 6, dadurch gekennzeichnet, daß die Rohrwendel (15) auf ihrer Außenseite von einer Hülse (35) umgeben ist, die einen Längsschlitz (37) aufweist, durch den die beiden radial abstehenden Enden der Rohrwendel beim Einschieben der Rohrwendel in die Hülse hindurchschiebbar sind, und daß der Längsschlitz (37) mit einer auf die Außenseite der Hülse (35) aufgelegten streifenförmigen Abdeckung (36) verschlossen ist, die zwei zu den Enden der Rohrwendel passende Löcher besitzt und in radialer Richtung auf die beiden Rohrwendelenden aufschiebbar und auf die Hülsenaußenseite aufsetzbar ist.

8. Vorrichtung nach Anspruch 1, dadurch gekennzeichnet, daß der elektrische Heizkörper (5) aus einem Heizstab (25) besteht, der durch eine Wasserablaßöffnung (20) am Boden des Brennstoff-Filtergehäuses (18) in den vom Filtereinsatz (19) freigelassenen Filterinnenraum eingeführt ist und auf dem Einschraubende (24) einer die Wasserablaßöffnung (20) verschließenden Wasserablaßschraube (21) angeordnet ist, durch die die Anschlußdrähte (26) des Heizstabes hindurchgeführt sind.

*Fig. 1*

Fig. 2

Fig. 3

Fig. 4

Fig. 5

Fig. 6

Fig. 8

Fig. 7